# EUROPEAN PATENT SPECIFICATION

(11) **EP 4 642 968 B1**
(45) Date of publication and mention of the grant of the patent: **11.11.2026**
(21) Application number: 23828222.2
(22) Date of filing: 15.12.2023
(51) Int. Cl.: D01F 1/02, D01F 1/10, D01F 2/00

(54) **A FIBROUS MONOFILAMENT, PRODUCTS COMPRISING THE SAME AND A METHOD FOR MANUFACTURING THE FIBROUS MONOFILAMENT**
FASERIGES MONOFILAMENT, PRODUKTE DIE DAS MONOFILAMENT ENTHALTEN UND EINE METHODE ZUR HERSTELLUNG DIESES FASERIGEN MONOFILAMENTS
MONOFILAMENT FIBREUX, PRODUITS LE COMPRENANT ET UNE METHODE POUR FABRIQUER LE MONOFILAMENT FIBREUX

(30) Priority: 29.12.2022 FI 20226182
(43) Date of publication of application: 05.11.2025
(73) Proprietor: Spinnova Oyj, 40320 Jyväskylä (FI)
(72) Inventor: SETÄLÄ, Harri, 40320 Jyväskylä (FI)
(74) Representative: Berggren Oy
(86) International application number: PCT/FI2023/050699
(87) International publication number: WO 2024/141702

(56) References cited:
- WO-A1-2017/095386
- US-A1- 2015 291 752
- US-A1- 2017 306 562

## Description

### Technical field

This specification relates to a fibrous monofilament, products comprising the same as well as to a method of manufacturing the fibrous monofilament.

### Background

Large-scale cotton cultivation requires significant resources of water. Cotton cultivation is widely carried out in regions already experiencing shortage of both water and food. Cotton cultivation reduces the available farming area for food production, increases consumption of water, and worsens the food and water supply problem. Use of cotton is unsustainable and replacing fiber sources are needed. US 2017/306562 A1 discloses a process for making fibers (monofilament i.a.) based on microfibrillar cellulose.

### Summary

A novel type of fibrous monofilament for replacing the use of unsustainable cotton, especially in textile industry, is provided. The disclosed fibrous monofilament shows good mechanical properties, such as wet strength properties and elasticity/elongation. Use of an amino-functional polymer component plays a role in improving the dyeing properties of the fibrous monofilament. Utilization of crosslinking reaction between the amino-functional polymer component and the epoxy-functional crosslinking agent enables adjustment of the monofilament properties in an aqueous reaction medium, without the need to use organic solvents or strong acids or bases.

According to an embodiment, a fibrous monofilament is provided. The fibrous monofilament comprises at least 50 wt.% of non-regenerated microfibrillar cellulose (MFC), amino-functional polymer component(s), and epoxy-functional crosslinking agent.

According to another embodiment, a method of manufacturing a fibrous monofilament is provided. The method comprises
- forming an aqueous suspension comprising from 80 to 98 wt.% of water and from 2 to 20 wt.% of dry matter including non-regenerated microfibrillar cellulose (MFC), amino-functional polymer component(s), and epoxy-functional crosslinking agent, the dry matter comprising at least 50 wt.% of non-regenerated MFC,
- extruding the suspension into a monofilament, and
- drying the monofilament.

According to yet another embodiment, a fibrous material is provided. The fibrous material comprises the fibrous monofilament as described above.

### Detailed description

The solution is described in the following in more detail with reference to some embodiments, which shall not be regarded as limiting.

The features recited in the embodiments of the description and in the claims are mutually freely combinable unless otherwise explicitly stated.

In the present disclosure the percentage values relating to an amount or share of raw materials are percentages by weight (wt.%) with respect to a dry fibrous monofilament, unless otherwise indicated.

Plant materials are built up by a matrix formed by cellulose fibers also containing lignin and hemicelluloses. The cellulosic fibers that form such a matrix are fibril bundles which in turn consist of microfibrils. Through a fibrillation process the cellulose fibers are separated into a three-dimensional network of microfibrils with a large surface area. These entangled fibrils are called microfibrillar cellulose (MFC). The width of entangled fibrils in MFC may be from 50 nanometers to 2 micrometers and length or longitudinal dimension may be from 100 nanometers to 500 micrometers, such as from 100 nanometers to 200 micrometers.

Within context of this disclosure, the method of manufacturing MFC is not limited. MFC may be produced from cellulose fibers using methods known within the art through high pressure, high temperature and high velocity impact homogenization, for instance. The homogenization process is used to delaminate or disintegrate the cell walls of the fibers and to liberate their substructural fibrils and microfibrils. Enzymatic and/or mechanical pre-treatments of wood fibers may also be used.

In the present disclosure expressions "non-regenerated cellulose" or "natural cellulose" refer to cellulose or cellulose fibrils or fibers that have not undergone chemical or physical modification of their macromolecular structure. Non-regenerated MFC as discussed herein is substantially non-regenerated and consists mainly of crystalline structure of cellulose I. Cellulose I may have structures I_{α} and I_{β}. Man-made cellulosic fibers commonly used in textile applications are regenerated and their crystalline structure is mainly other than cellulose I. Conversion of cellulose I to cellulose II (or other forms, like cellulose III or cellulose IV) is irreversible. Thus, these forms are stable and cannot be converted back to cellulose I.

Within context of this disclosure, cellulose may originate from any plant-based material. Plant-based raw material may be wood material or non-wood material. The wood material can be based on softwood tree, such as spruce, pine, fir, larch, Douglas-fir or hemlock, or on hardwood tree, such as birch, aspen, poplar, alder, eucalyptus or acacia, or on any mixture of above. The non-wood material may be as cotton, hemp, flax, sisal, jute, kenaf, bamboo, peat, or coconut. Non-wood based natural cellulose fibers may also be derived from agricultural residues, grasses, or other plant substances such as straw, leaves, bark, seeds, hulls, flowers, vegetables, or fruits. Woody plants have a good availability, small environmental burden and the quality of fiber is good. The above applies both to non-regenerated cellulose and also regenerated and processed forms of cellulose.

It is an aim of this disclosure to provide a novel type of fibrous monofilament for replacing use of unsustainable cotton, especially in textile industry. The fibrous monofilament as disclosed herein has mechanical properties enabling its use in fibrous materials, such as woven, knitted, non-woven or composite materials. Further, improved dyeing properties of the fibrous monofilament may be achieved.

The term "fibrous monofilament" as used herein refers to a continuous length of individual fibrils grouped and extending generally along the longitudinal dimension of the cellulose monofilament. The fibrils are interlocked together in order to form a permanent monofilament structure. The monofilament cannot be opened or disassembled. Disintegration of fibrous monofilament yields individual fibrils. The fibrous monofilament may comprise continuous length of several meters or kilometers. Individual fibrils of the fibrous monofilament are mainly oriented along length of the fibrous monofilament. Term "monofilament" refers to a single strand filament produced by extruding a polymer suspension. Fibrous monofilament may also be called a monofilament fiber.

The fibrous monofilament according to this disclosure comprises or consists of at least 50 wt.% of non-regenerated microfibrillar cellulose (MFC), amino-functional polymer component(s), and epoxy-functional crosslinking agent.

According to an embodiment, the fibrous monofilament comprises from 50 to 95 wt.% non-regenerated MFC, from 0.5 to 20 wt.% amino-functional polymer component(s), and/or from 0.1 to 5.0 wt.% epoxy-functional crosslinking agent (percentages with respect to the weight of the dry fibrous monofilament).

For example, the amount of the non-regenerated MFC in the fibrous monofilament may be from 60 to 95 wt.%, from 70 to 95 wt.%, from 80 to 95 wt.%, or from 80 to 90 wt.%. The amount of the amino-functional polymer component may be from 0.5 to 15 wt.%, from 0.5 to 10 wt.%, from 5 to 15 wt.%, or from 5 to 10 wt.%. The amount of the epoxy-functional crosslinking agent may be from 0.1 to 2.5 wt.%, from 0.1 to 1.0 wt.%, from 0.1 to 0.5 wt.%, or from 0.1 to 0.4 wt.%.

Addition of amino-functional polymer component(s) and epoxy-functional crosslinking agent enables improvement of the mechanical properties, such as wet strength properties and elasticity/elongation of the fibrous monofilament comprising MFC. Further, amino-functional polymer component plays a role in improving the dyeing properties of the fibrous monofilament. Monofilament properties, such as wet strength properties, elasticity/elongation and/or dyeing properties can be adjusted by tuning the ratio of the non-regenerated MFC, amino-functional polymer component and epoxy-functional crosslinking agent. Utilization of crosslinking reaction between the amino-functional polymer component and the epoxy-functional crosslinking agent enables adjustment of the monofilament properties in an aqueous reaction medium, without the need to use organic solvents or strong acids or bases.

The amino-functional polymer component is spread uniformly into the 3D-network formed by the fibrils.

Use of crosslinker significantly improves the mechanical properties of the fibrous monofilament. Tenacity is improved without decreasing elongation, when compared to monofilament prepared without crosslinker. The results indicate also rather similar monofilament properties with the monofilaments prepared according to a typical recipe used so far, including MFC, CMC, polyamidoamine-epichlorohydrin resin (PAE) and anionic polyacrylamide (aPAM).

Tenacity is a customary measure of strength of a fiber or yarn. It is usually defined as the ultimate (breaking) force of the fiber/yarn (in gram-force units) divided by the linear density. Tenacity is often expressed as cN/(d)tex. Linear density is a value expressing the fiber/yarn weight in grams per 1 000 meters of fiber/yarn (tex) or grams per 10 000 meters of fiber/yarn (dtex).

The fibrous monofilament according to this disclosure may have a linear density of from 2 to 10 dtex, when measured following standard ASTM 3822/D3822M-14 at RH 65% (+/- 2%) and temperature 20 °C (+/- 2 °C).

The fibrous monofilament according to this disclosure may have a tenacity of at least 1 cN/dtex, preferably at least 1.5 cN/dtex or more preferably at least 2 cN/dtex, when measured following standard ASTM 3822/D3822M-14 at RH 65% (+/- 2%) and temperature 20 °C (+/- 2 °C).

The fibrous monofilament may have a density of between 500 and 2000 kg/m³, for example between 1000 and 1700 kg/m³.

The amino-functional polymer component may be biobased. When the amino-functional polymer component and the optional polymeric additive are biobased, the biodegradability of the fibrous monofilament may be improved. Biodegradability of a material means that greater than 90 % of the original material is converted into CO₂, water and minerals by biological processes within 6 months.

The biobased amino-functional polymer component may be polysaccharide-based, such as a cellulose derivative, chitosan or a combination thereof. Amino-functional polymer component refers to a polymer structure having a free amino group. Particularly, the amino-functional component has a free amino group that is available for reaction with the epoxy-functional crosslinking agent.

The amino-functional polymer component that is a cellulose derivative may be an amino-functionalized hydroxyethyl cellulose or an amino-functionalized hydroxypropyl cellulose. Hydroxyethyl cellulose and hydroxypropyl cellulose are ethers of cellulose, wherein at least some of the hydroxyl groups in the repeating glucose units have been hydroxyethylated or hydroxypropylated, respectively. The average number of substituted hydroxyl groups per glucose unit is referred to as the degree of substitution (DS). Degree of substitution in terms of the hydroxyethylation or hydroxypropylation (DS_{HE/HP}) may be from 0.5 to 3.0.

Amino-functionalized hydroxyethyl cellulose or amino-functionalized hydroxypropyl cellulose are cellulose ethers wherein some of the hydroxyl groups in the repeating glucose units have been substituted by providing the cellulose backbone with a free amino group. The free amino group may be attached directly or via a linker to the C6-position of anhydroglucose unit in cellulose backbone. The linker may for example be an alkyl group or an alkyl ether group. Alternatively or additionally, hydroxyl group of the hydroxyethyl or hydroxypropyl substituent can be modified to contain a free amino group. Degree of substitution in terms of the free amino group (DS_{NH2}) may be from 0.01 to 1.0, for example from 0.01 to 0.4.

Formula I shown later in the Examples section represents exemplary structure of an amino-functionalized hydroxypropyl cellulose. As already mentioned, similarly amino-functionalized hydroxyethyl cellulose may be utilized, as well. In principle the amino-functionalized hydroxypropyl/hydroxyethyl cellulose may have any kind of a structure, as long as it has a free amino group (-NH₂).

Chitosan is a linear polysaccharide composed of randomly distributed β-(1→4)-linked D-glucosamine (deacetylated unit) and N-acetyl-D-glucosamine (acetylated unit). Chitosan is produced commercially by deacetylation of chitin, which is a structural element in the exoskeleton of crustaceans and cell walls of fungi. Degree of deacetylation (%DD) in commercial chitosan ranges from 60 to 100 %. Chitosan by its nature has free amino groups for reaction with the epoxy-functional crosslinking agent.

Alternatively or additionally, the amino-functional polymer component may be of synthetic origin. Examples of amino-functional polymer components of synthetic origin include amine-terminated polyethylene oxide derivatives and amine-terminated polypropylene glycol derivatives.

The epoxy-functional crosslinking agent contains at least two epoxy groups. The epoxy group is capable of reacting with the free amino group of the amino-functional polymer component. When at least two epoxy groups of a single crosslinking agent molecule react with free amino groups, a crosslink is formed. Besides the amino groups of the amino-functional polymer component, the epoxy groups are also capable of reacting with carboxylic acid and hydroxyl groups of for example cellulosic molecules. However, the free amino group is more prone than hydroxyl or carboxyl group to reaction with the epoxy functionality. Thus, introduction of amino functionality into the cellulosic suspension makes modification of the cellulosic fibrils via crosslinking more efficient.

The epoxy-functional crosslinking agent may be based on diglycidyl ether chemistry. For example, the epoxy-functional crosslinking agent may be polyethylene glycol diglycidyl ether (PEGDGE).

Naturally, once the crosslinking has taken place, the free amino group of the amino-functional polymer and the epoxy group of the crosslinking agent as such no longer exist, but a secondary amine is formed as a result of the aminoepoxy reaction. Structure comprising the thus formed secondary amine is more stable in alkaline conditions than an ester bond formed between the epoxy group and cellulosic carboxylic group. This is an important feature since many dyeing methods are performed in alkaline conditions. Thus, via the aminoepoxy reaction improved stability in alkaline dyeing conditions is introduced, thereby improving the dyeing properties of the fibrous monofilament.

According to an embodiment, the fibrous monofilament further comprises at least one polymeric additive. The polymeric additive(s) may include for example dispersing agents, strength additive(s), rheology modifiers, plasticizers and/or emulsifying agents. Amount of the polymeric additive(s) is from 0 to 25 wt.%, for example from 0.5 to 25 wt.% (with respect to the weight of the dry fibrous monofilament).

According to an embodiment, the fibrous monofilament comprises a dispersing agent. The dispersing agent may be the only polymeric additive used, or alternatively, the fibrous monofilament may comprise also other polymeric additives than the dispersing agent. The dispersing agent may improve separation of the MFC fibrils and prevent their settling or clumping in the manufacturing process of the fibrous monofilament.

The polymeric additive may be polyethylene oxide (PEO), polyvinyl alcohol (PVA), carboxymethyl cellulose (CMC), hydroxyethyl cellulose (HEC), ethyl hydroxyethyl cellulose (EHEC), methyl cellulose (MC), hydroxypropyl methyl cellulose (HPMC), hydroxyethyl methyl cellulose (HEMC), methyl ethyl hydroxyethyl cellulose (MEHEC), hydroxypropyl cellulose (HPC), ethyl cellulose (EC), starch, polyglycerol polyglycidyl ether, sorbitol polyglycidyl ether, or any combination thereof.

The polymeric additive(s) may for example adjust rheology of the suspension used for forming the fibrous monofilament and/or elastic properties of the fibrous monofilament. Dispersing agent, such as CMC, HEC, EHEC, MC, HPMC, HEMC, MEHEC, HPC, EC and starch, may have an effect on shear strength of the fibrous monofilament. The strength additive, such as CMC, PVA and PEO, may improve the dry and/or wet strength of the fibrous monofilament. PEO may also be used to increase elasticity of the fibrous monofilament. Further, PEO is non-reactive towards the epoxy groups of the crosslinker.

According to an embodiment, the fibrous monofilament further comprises at least one monoepoxy reagent. Examples of suitable monoepoxy reagents include allyl glycidyl ether, butyl glycidyl ether, isopropyl glycidyl ether, 1,2-epoxyhexane and benzyl glycidyl ether. At least one monoepoxy reagent may be added to adjust hydrophobicity of the fibrous monofilament, to improve antipilling performance of the monofilament, or to produce more breathable and flexible fibrous monofilaments and the products therefrom. The monoepoxy reagent is capable of reacting with the amino, hydroxyl and carboxylic acid groups of the components forming the fibrous monofilament. However, as the monoepoxy reagent only has one epoxy group, the reagent does not participate in crosslinking formation.

According to an exemplary embodiment, the fibrous monofilament comprises or consists of at least 50 wt.% of non-regenerated microfibrillar cellulose (MFC), amino-functional cellulose ether as the amino-functional polymer component, PEGDGE as the epoxy-functional crosslinking agent and PEO or MHEC as a polymeric additive.

According to another exemplary embodiment, the fibrous monofilament comprises or consists of at least 50 wt.% of non-regenerated microfibrillar cellulose (MFC), amino-functional cellulose ether as the amino-functional polymer component, PEGDGE as the epoxy-functional crosslinking agent and CMC as a dispersing agent.

According to yet another exemplary embodiment, the fibrous monofilament comprises or consists of at least 50 wt.% of non-regenerated microfibrillar cellulose (MFC), amino-functional cellulose ether as the amino-functional polymer component, PEGDGE as the epoxy-functional crosslinking agent, PEO or MHEC as a polymeric additive and CMC as a dispersing agent.

For manufacturing of the fibrous monofilament an aqueous suspension comprising water, non-regenerated microfibrillar cellulose (MFC), amino-functional polymer component(s), and epoxy-functional crosslinking agent is formed. The aqueous suspension comprises from 80 to 98 wt.% of water and from 2 to 20 wt.% of dry matter. Of the dry matter content, at least 50 wt.% is non-regenerated MFC.

Usual order of adding the components (added to an aqueous solution) to form the aqueous suspension is MFC, amino-functional polymer component and epoxy-functional crosslinking agent. The optional polymeric additive(s) may be added right after MFC or after addition of the amino-functional polymer component. In any case, the epoxy-functional crosslinking agent is added to the suspension after addition of the amino-functional polymer component.

The aqueous suspension is directed (extruded) through a small nozzle where fibrils align (orient) well with the flow. The nozzle feeds the aqueous suspension to a solid surface which is followed by drying to obtain the fibrous monofilament.

Initial fibril orientation of the fibrous monofilament may be achieved during the extrusion phase. A nozzle having an outer diameter smaller than or equal to the maximum fibril length of the fibrils causes the fibrils to orientate substantially in the longitudinal direction of the suspension exiting the nozzle. Fibril orientation along the longitudinal direction of the fibrous monofilament provides strength to the filament.

The fibrous monofilament may be produced via a single step process. Thus, manufactured fibrous monofilament is continuous but it may be postprocessed into shorter lengths by any of suitable methods known in the art. Thickness of the fibrous monofilament may be affected at least in part by adapting manufacturing speed, aqueous suspension concentration and nozzle geometry.

As the suspension contains amino-functional polymer component(s), maintaining optimal pH in the suspension may play a role in the manufacturing process. pH values of at least 7.5 are favourable for the reaction of the epoxide groups of the crosslinking agent with the amino groups of the amino-functional polymer component. Under acidic conditions (at pH 6 and below) a reaction between epoxide groups and carboxylic acid groups of the cellulose may be more favourable. pH of the suspension may be adjusted to be optimal using any suitable pH adjusting/maintenance agent, such as a buffer solution and/or a base (catalyst). The pH adjusting/maintenance agent is preferably added to the suspension prior to adding the epoxy-functional crosslinking agent. Alternatively, the pH adjusting/maintenance agent may be added right before extruding the suspension. The pH adjusting/maintenance agent such as a base may serve as a catalyst for the crosslinking reaction. For example, the pH adjusting/maintenance agent may be NaOH.

The fibrous monofilament according to this disclosure finds use in fibrous materials, such as woven, knitted or non-woven materials or composite materials. For woven, knitted and/or composite materials, a yarn manufactured from the fibrous monofilament may be used.

### Examples

Exemplary laboratory scale fibrous monofilaments, which may also be called spun fibers, comprising an amino-functional cellulose ether as the amino-functional polymer component were prepared as follows.

The monofilaments included 83-85 wt.% non-regenerated MFC as the main component. Amino-functional cellulose ether was a representative of a general structural formula (Formula I) as shown below. In Formula I shown below, R represents hydroxypropyl groups and RNH₂ represents an alkyl ether linker comprising a free amino group.

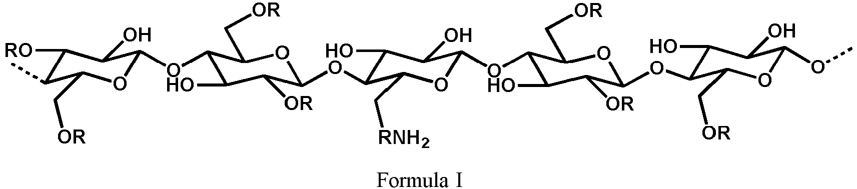

Amount of the amino-functional cellulose ether was 2-10 wt.%. The amino-functional cellulose ether had the following degree of substitutions: DS_{HP} 1.0-1.7 and DS_{NH2} 0.01-0.10. The monofilaments also contained 4-6 wt.% of PEO (MW = 4 million Da) or 4-6 wt.% of MHEC. The monofilaments further comprised 0.1-0.4 wt.% of PEGDGE (Mn 500) as the epoxy-functional crosslinking agent.

An exemplary aqueous suspension was prepared by weighing 58 g of non-regenerated MFC and mixing it with 63 g of tap water. Thereafter, a beforehand prepared solution containing 2 g of amino-functional cellulose ether of Formula I and 18 g of tap water was mixed to the MFC suspension. After that, 25.5 g of PEO was added as a 2.11 wt.% solution that had been separately prepared beforehand. Finally, a 2 wt.% PEGDGE solution (0.2 g in 9.8 g tap water) was added. After addition of each of the reagents, the suspension was mixed by hand for 1-2 minutes.

Once all the reagents were added and mixed by hand, the suspension was mixed for 10 minutes with 500 rpm. After that, pH and dry matter content of the suspension were measured. Typically, the dry matter contents were from 5.0 to 5.5 wt.% and pH was 7.0-8.0.

Suspension was extruded onto a surface and dried. Dried samples were evaluated for linear density, elongation, tenacity and monofilament width. The measurements followed standard ASTM 3822/D3822M-14 at RH 65% (+/- 2%) and temperature 20 °C (+/- 2 °C).

Fibrous monofilament/spun fiber containing 83.6 wt.% MFC, 6.0 wt.% PEO, 10.1 wt.% amino-functional cellulose ether having the Formula I and 0.29 wt.% PEGDGE showed monofilament width of 85 µm and linear density of about 4.6-4.9 dtex. Tenacity was about 1.9-2.1 cN/dtex and elongation about 8.9-9.3 %.

Fibrous monofilament/spun fiber containing 6.0 wt.% of MHEC instead of PEO showed somewhat higher monofilament width (105 µm). Linear density was shown to be comparable with the fibrous monofilament/spun fiber comprising PEO (about 4.9 dtex). However, tenacity and elongation were shown to be lower (about 0.6 cN/dtex and about 2.9 %, respectively).

## Claims

1. A fibrous monofilament comprising:
- at least 50 wt.% of non-regenerated microfibrillar cellulose (MFC),
- amino-functional polymer component(s), and
- epoxy-functional crosslinking agent.

2. The fibrous monofilament according to claim 1, further comprising
- polymeric additive(s).

3. The fibrous monofilament according to claim 1 or 2, further comprising
- a dispersing agent.

4. The fibrous monofilament according to any of the preceding claims, wherein
- amount of the non-regenerated microfibrillar cellulose (MFC) is from 50 to 95 wt.%,
- amount of the amino-functional polymer component(s) is from 0.5 to 20 wt.%,
- amount of the epoxy-functional crosslinking agent is from 0.1 to 5.0 wt.%, and/or
- amount of the polymeric additive(s) is from 0 to 25 wt.%.

5. The fibrous monofilament according to any of the preceding claims, wherein the amino-functional polymer component is biobased.

6. The fibrous monofilament according to any of the preceding claims, wherein the amino-functional polymer component is polysaccharide-based.

7. The fibrous monofilament according to claim 6, wherein the polysaccharide-based amino-functional polymer component is a cellulose derivative or chitosan.

8. The fibrous monofilament according to claim 7, wherein the cellulose derivative is an amino-functionalized hydroxyethyl cellulose or an amino-functionalized hydroxypropyl cellulose.

9. The fibrous monofilament according to any of the claims 1-4, wherein the amino-functional polymer component is an amine-terminated polyethylene oxide derivative or an amine-terminated polypropylene glycol derivative.

10. The fibrous monofilament according to any of the preceding claims, wherein the epoxy-functional crosslinking agent is based on diglycidyl ether chemistry.

11. The fibrous monofilament according to claim 10, wherein the epoxy-functional crosslinking agent is polyethylene glycol diglycidyl ether (PEGDGE).

12. The fibrous monofilament according to any of the claims 2-11, wherein the polymeric additive is polyethylene oxide (PEO), polyvinyl alcohol (PVA), carboxymethyl cellulose (CMC), hydroxyethyl cellulose (HEC), ethyl hydroxyethyl cellulose (EHEC), methyl cellulose (MC), hydroxypropyl methyl cellulose (HPMC), hydroxyethyl methyl cellulose (HEMC), methyl ethyl hydroxyethyl cellulose (MEHEC), hydroxypropyl cellulose (HPC), ethyl cellulose (EC), starch, polyglycerol polyglycidyl ether, sorbitol polyglycidyl ether, or any combination thereof.

13. The fibrous monofilament according to any of the preceding claims, further comprising
- monoepoxy reagent(s).

14. A method of manufacturing a fibrous monofilament, the method comprising
- forming an aqueous suspension comprising from 80 to 98 wt.% of water and from 2 to 20 wt.% of dry matter including non-regenerated microfibrillar cellulose (MFC), amino-functional polymer component(s), and epoxy-functional crosslinking agent, the dry matter comprising at least 50 wt.% of non-regenerated MFC,
- extruding the suspension into a monofilament, and
- drying the monofilament.

15. The method according to claim 14, wherein the dry matter further includes polymeric additive(s).

16. The method according to claim 14 or 15, wherein the dry matter further includes a dispersing agent.

17. The method according to any of the claims 14-16, wherein the dry matter further includes monoepoxy reagent(s).

18. The method according to any of the claims 14-17, further comprising adjusting pH of the suspension to be at least 7.5.

19. A fibrous material comprising the fibrous monofilament according to any of the claims 1-13.

20. The fibrous material according to claim 19, wherein the fibrous material is a woven material or a knitted material.

21. The fibrous material according to claim 19, wherein the fibrous material is a non-woven material.

22. The fibrous material according to claim 19, wherein the fibrous material is a composite material.

## Patentansprüche

1. Ein faseriges Monofilament, umfassend:
- mindestens 50 Gew.-% nichtregenerierte mikrofibrilläre Cellulose (MFC),
- aminofunktionelle Polymerkomponente(n) und
- ein epoxidfunktionelles Vernetzungsmittel.

2. Das faserige Monofilament nach Anspruch 1, ferner umfassend:
- Polymeradditiv(e).

3. Das faserige Monofilament nach Anspruch 1 oder 2, ferner umfassend:
- ein Dispergiermittel.

4. Das faserige Monofilament nach einem der vorhergehenden Ansprüche, wobei
- die Menge der nichtregenerierten mikrofibrillären Cellulose (MFC) 50 bis 95 Gew.-% beträgt,
- die Menge der aminofunktionellen Polymerkomponente(n) 0,5 bis 20 Gew.-% beträgt,
- die Menge des epoxidfunktionellen Vernetzungsmittels 0,1 bis 5,0 Gew.-% beträgt und/oder
- die Menge des Polymeradditivs bzw. der Polymeradditive 0 bis 25 Gew.-% beträgt.

5. Das faserige Monofilament nach einem der vorhergehenden Ansprüche, wobei die aminofunktionelle Polymerkomponente biobasiert ist.

6. Das faserige Monofilament nach einem der vorhergehenden Ansprüche, wobei die aminofunktionelle Polymerkomponente polysaccharidbasiert ist.

7. Das faserige Monofilament nach Anspruch 6, wobei die polysaccharidbasierte aminofunktionelle Polymerkomponente ein Cellulosederivat oder Chitosan ist.

8. Das faserige Monofilament nach Anspruch 7, wobei das Cellulosederivat eine aminofunktionalisierte Hydroxyethylcellulose oder eine aminofunktionalisierte Hydroxypropylcellulose ist.

9. Das faserige Monofilament nach einem der Ansprüche 1-4, wobei die aminofunktionelle Polymerkomponente ein aminterminiertes Polyethylenoxidderivat oder ein aminterminiertes Polypropylenglycolderivat ist.

10. Das faserige Monofilament nach einem der vorhergehenden Ansprüche, wobei das epoxidfunktionelle Vernetzungsmittel auf Diglycidyletherchemie basiert.

11. Das faserige Monofilament nach Anspruch 10, wobei das epoxidfunktionelle Vernetzungsmittel Polyethylenglycoldiglycidylether (PEGDGE) ist.

12. Das faserige Monofilament nach einem der Ansprüche 2-11, wobei das Polymeradditiv Polyethylenoxid (PEO), Polyvinylalkohol (PVA), Carboxymethylcellulose (CMC), Hydroxyethylcellulose (HEC), Ethylhydroxyethylcellulose (EHEC), Methylcellulose (MC), Hydroxypropylmethylcellulose (HPMC), Hydroxyethylmethylcellulose (HEMC), Methylethylhydroxyethylcellulose (MEHEC), Hydroxypropylcellulose (HPC), Ethylcellulose (EC), Stärke, Polyglycerolpolyglycidylether, Sorbitolpolyglycidylether oder eine beliebige Kombination davon ist.

13. Das faserige Monofilament nach einem der vorhergehenden Ansprüche, ferner umfassend:
- Monoepoxidreagenz(ien).

14. Ein Verfahren zur Herstellung eines faserigen Monofilaments, wobei das Verfahren umfasst:
- Bilden einer wässrigen Suspension, die 80 bis 98 Gew.-% Wasser und 2 bis 20 Gew.-% Trockenmasse umfasst, die nichtregenerierte mikrofibrilläre Cellulose (MFC), aminofunktionelle Polymerkomponente(n) und ein epoxidfunktionelles Vernetzungsmittel enthält, wobei die Trockenmasse mindestens 50 Gew.-% nichtregenerierte MFC umfasst,
- Extrudieren der Suspension zu einem Monofilament und
- Trocknen des Monofilaments.

15. Das Verfahren nach Anspruch 14, wobei die Trockenmasse ferner Polymeradditiv(e) enthält.

16. Das Verfahren nach Anspruch 14 oder 15, wobei die Trockenmasse ferner ein Dispergiermittel enthält.

17. Das Verfahren nach einem der Ansprüche 14-16, wobei die Trockenmasse ferner Monoepoxidreagenz(ien) enthält.

18. Das Verfahren nach einem der Ansprüche 14-17, ferner umfassend das Einstellen des pH-Werts der Suspension auf mindestens 7,5.

19. Ein Fasermaterial, umfassend das faserige Monofilament nach einem der Ansprüche 1-13.

20. Das Fasermaterial nach Anspruch 19, wobei das Fasermaterial ein Webmaterial oder ein Strickmaterial ist.

21. Das Fasermaterial nach Anspruch 19, wobei das Fasermaterial ein Vliesmaterial ist.

22. Das Fasermaterial nach Anspruch 19, wobei das Fasermaterial ein Verbundmaterial ist.

## Revendications

1. Un monofilament fibreux comprenant :
- au moins 50 % en poids de cellulose microfibrillaire (MFC) non régénérée ;
- un ou plusieurs composants polymères à fonction amino ; et
- un agent de réticulation à fonction époxy.

2. Le monofilament fibreux selon la revendication 1, comprenant en outre :
- un ou plusieurs additifs polymères.

3. Le monofilament fibreux selon la revendication 1 ou 2, comprenant en outre :
- un agent dispersant.

4. Le monofilament fibreux selon l'une quelconque des revendications précédentes, dans lequel :
- la quantité de cellulose microfibrillaire (MFC) non régénérée est de 50 à 95 % en poids ;
- la quantité du ou des composants polymères à fonction amino est de 0,5 à 20 % en poids ;
- la quantité de l'agent de réticulation à fonction époxy est de 0,1 à 5,0 % en poids ; et/ou
- la quantité du ou des additifs polymères est de 0 à 25 % en poids.

5. Le monofilament fibreux selon l'une quelconque des revendications précédentes, dans lequel le composant polymère à fonction amino est biosourcé.

6. Le monofilament fibreux selon l'une quelconque des revendications précédentes, dans lequel le composant polymère à fonction amino est à base de polysaccharide.

7. Le monofilament fibreux selon la revendication 6, dans lequel le composant polymère à fonction amino à base de polysaccharide est un dérivé de cellulose ou du chitosane.

8. Le monofilament fibreux selon la revendication 7, dans lequel le dérivé de cellulose est une hydroxyéthylcellulose fonctionnalisée par des groupes amino ou une hydroxypropylcellulose fonctionnalisée par des groupes amino.

9. Le monofilament fibreux selon l'une quelconque des revendications 1-4, dans lequel le composant polymère à fonction amino est un dérivé d'oxyde de polyéthylène à terminaison aminée ou un dérivé de polypropylèneglycol à terminaison aminée.

10. Le monofilament fibreux selon l'une quelconque des revendications précédentes, dans lequel l'agent de réticulation à fonction époxy est basé sur la chimie des éthers diglycidyliques.

11. Le monofilament fibreux selon la revendication 10, dans lequel l'agent de réticulation à fonction époxy est l'éther diglycidylique de polyéthylèneglycol (PEGDGE).

12. Le monofilament fibreux selon l'une quelconque des revendications 2-11, dans lequel l'additif polymère est l'oxyde de polyéthylène (PEO), l'alcool polyvinylique (PVA), la carboxyméthylcellulose (CMC), l'hydroxyéthylcellulose (HEC), l'éthylhydroxyéthylcellulose (EHEC), la méthylcellulose (MC), l'hydroxypropylméthylcellulose (HPMC), l'hydroxyéthylméthylcellulose (HEMC), la méthyléthylhydroxyéthylcellulose (MEHEC), l'hydroxypropylcellulose (HPC), l'éthylcellulose (EC), l'amidon, l'éther polyglycidylique de polyglycérol, l'éther polyglycidylique de sorbitol, ou une combinaison quelconque de ceux-ci.

13. Le monofilament fibreux selon l'une quelconque des revendications précédentes, comprenant en outre :
- un ou plusieurs réactifs monoépoxy.

14. Un procédé de fabrication d'un monofilament fibreux, le procédé comprenant :
- la formation d'une suspension aqueuse comprenant de 80 à 98 % en poids d'eau et de 2 à 20 % en poids de matière sèche incluant de la cellulose microfibrillaire (MFC) non régénérée, un ou plusieurs composants polymères à fonction amino et un agent de réticulation à fonction époxy, la matière sèche comprenant au moins 50 % en poids de MFC non régénérée ;
- l'extrusion de la suspension sous la forme d'un monofilament ; et
- le séchage du monofilament.

15. Le procédé selon la revendication 14, dans lequel la matière sèche inclut en outre un ou plusieurs additifs polymères.

16. Le procédé selon la revendication 14 ou 15, dans lequel la matière sèche inclut en outre un agent dispersant.

17. Le procédé selon l'une quelconque des revendications 14-16, dans lequel la matière sèche inclut en outre un ou plusieurs réactifs monoépoxy.

18. Le procédé selon l'une quelconque des revendications 14-17, comprenant en outre l'ajustement du pH de la suspension à au moins 7,5.

19. Un matériau fibreux comprenant le monofilament fibreux selon l'une quelconque des revendications 1-13.

20. Le matériau fibreux selon la revendication 19, dans lequel le matériau fibreux est un matériau tissé ou un matériau tricoté.

21. Le matériau fibreux selon la revendication 19, dans lequel le matériau fibreux est un matériau non tissé.

22. Le matériau fibreux selon la revendication 19, dans lequel le matériau fibreux est un matériau composite.
